# FASCICULE DE BREVET EUROPEEN

(11) **EP 1 742 326 B1**
(45) Date de publication et mention de la délivrance du brevet: **14.12.2011**
(21) Numéro de dépôt: 06115053.8
(22) Date de dépôt: 07.06.2006
(51) Int. Cl.: H02K 1/16

(54) **Machine électrique tournante possédant des moyens de réduction de pertes**
Elektrische Drehmaschine mit Mittel zur Verlustreduzierung
Electrical rotary machine with loss reduction means

(30) Priorité: 28.06.2005 FR 0506575
(43) Date de publication de la demande: 10.01.2007
(73) Titulaire: VALEO EQUIPEMENTS ELECTRIQUES MOTEUR, 94017 Créteil Cedex (FR)
(72) Inventeur: Mipo, Jean-Claude, 94017, CRETEIL (FR); Bouarroudj, Lilya, 94017, CRETEIL (FR); Foggia, Albert, 38402, SAINT MARTIN D'HERES (FR)

(56) Documents cités:
- DE-A1- 10 229 333
- FR-A- 2 784 518
- JP-A- 5 184 088
- JP-A- 2003 264 943
- US-B1- 6 864 612

## Description

La présente invention est relative aux machines électriques tournantes, notamment aux alternateurs pour véhicules automobiles, possédant des moyens de réduction de pertes.

Plus particulièrement, l'invention concerne une machine électrique tournante, et notamment un alternateur de véhicule automobile, possédant un rotor et un stator, le stator comportant une culasse et une pluralité d'encoches pour des brins de bobinage inducteur ou de bobinage d'induit, et des dents séparant les encoches adjacentes, lesdites dents comprenant chacune une base par laquelle la dent est reliée à la culasse du stator, et une face terminale tournée vers le rotor, la face terminale d'au moins une dent comprenant au moins une fente en position(s) angulaire(s) intermédiaire(s) entre les bords des dents qui délimitent lesdites encoches.

Par fente, on comprend ici un évidement dont la profondeur dans une direction radiale perpendiculaire à l'axe de la machine est supérieure à la largeur de la fente dans une direction circonférentielle perpendiculaire à l'axe de la machine et à ladite direction radiale.

Par JP2003264943(A), il est connu un moteur électrique dans lequel les dents du stator comportent chacune une fente. Cette fente a une profondeur comprise entre 10% et 70% de la hauteur de la dent et a pour fonction de réduire les vibrations et le bruit provoqués par les variations de couple du moteur.

La demande de brevet français FR-A-2 784 518 décrit une machine électrique tournante du type précité. Dans la machine, le stator comporte des dents fendues, afin de diminuer le bruit magnétique. Dans cette demande, la profondeur d'une fente dans une dent du stator considérée suivant la direction radiale est sensiblement égale à une valeur maximale correspondant à la distance entre la face terminale et la base de la dent appelée hauteur de la dent.

Dans une telle machine, un flux magnétique est généré dans le stator pour l'entraînement du rotor, ou par la rotation du rotor. Ce flux peut engendrer des phénomènes de courants de Foucault dans les dents du stator, sous la forme de boucles de courant. L'intensité de ces courants, à l'origine de pertes résistives (appelées « pertes fer ») et d'échauffement du matériau magnétique du stator, est inversement proportionnelle à la résistance du chemin parcouru par le courant dans le matériau. Ainsi, en formant une fente dans le matériau, le courant est contraint de contourner cette fente, ce qui allonge le chemin de la boucle de courant, augmentant ainsi la résistance de ce chemin de courant. Les pertes par courants de Foucault peuvent donc être diminuées au moyen de fentes.

Cependant, le courant fourni par l'alternateur est plus faible en raison d'une diminution de la section de la dent du fait de la fente. En effet, la surface pour générer le flux magnétique est plus faible ce qui entraîne une diminution du flux magnétique et donc du courant généré.

La présente invention a notamment pour but de pallier cet inconvénient.

La machine électrique tournante selon l'invention, notamment un alternateur de véhicule automobile, possède un rotor et un stator, le stator comportant une culasse et une pluralité d'encoches pour recevoir des brins de bobinage d'induit, et des dents séparant les encoches adjacentes, les dents comprenant chacune une base par laquelle la dent est reliée à la culasse du stator, et une face terminale tournée vers le rotor, la face terminale d'au moins une dent comprenant au moins une zone d'évidement comportant au moins un évidement en position angulaire intermédiaire entre les bords des dents qui délimitent les encoches, la zone d'évidement ayant pour fonction de réduire les pertes par courants de Foucault par une augmentation du trajet desdits courants. Plus précisément, l'évidement s'étend suivant la direction radiale sur une profondeur qui est comprise entre 25% et 35% de la distance entre la face terminale et la base de la dent appelée hauteur de la dent.

Grâce à ces dispositions, le chemin de courant de Foucault est tel que les pertes par courants de Foucault sont diminuées par rapport à une machine dont les dents ne sont pas fendues.

Par ailleurs, grâce à ces dispositions, la section de la dent n'est pas trop diminuée de sorte que le débit du courant n'est pas trop diminué par rapport à une machine avec des dents fendues selon l'art antérieur illustré par le document FR-A-2 784 518.

Dans divers modes de réalisation du procédé non limitatifs selon l'invention, on peut éventuellement avoir recours en outre à l'une et/ou à l'autre des dispositions suivantes :
- La profondeur de l'évidement est sensiblement égale à un tiers de la hauteur de la dent ;
- toutes les dents du stator comportent au moins une zone d'évidement ;
- la largeur de la zone d'évidement au niveau de la face terminale de la dent est comprise entre 1% et 50% de la largeur de ladite face terminale, ces largeurs étant définies suivant une direction circonférentielle perpendiculaire à l'axe de la machine et à la direction radiale ;
- ledit au moins un évidement est une fente débouchant sur la face terminale de la dent et, au niveau du fond de la fente, la section de la fente suivant un plan essentiellement perpendiculaire à l'axe de la machine est de forme arrondie ;
- la fente a une forme sensiblement trapézoïdale qui s'étend en s'élargissant depuis la base de la dent vers la face terminale, et ladite section de la fente suivant un plan essentiellement perpendiculaire à l'axe de la machine et de forme arrondie forme un arc d'au moins 180° .

D'autres caractéristiques et avantages de l'invention apparaîtront à la lecture de la description suivante de différents modes de réalisation, donnés à titre d'exemples non limitatifs, en regard des dessins joints. Sur les dessins :
- la figure 1 est une vue en coupe transversale partielle d'un stator d'une machine tournante conforme à l'invention ;
- la figure 2 est une vue en coupe d'une dent du stator de la figure 1 selon un premier mode de réalisation de la présente invention;
- la figure 3 est une vue en coupe d'une dent d'un stator selon un deuxième mode de réalisation de la présente invention ;
- la figure 4 est une vue en coupe d'une dent d'un stator selon un troisième mode de réalisation de la présente invention ;
- la figure 5 est une vue en coupe d'une dent d'un stator selon un quatrième mode de réalisation de la présente invention ; et
- la figure 6 est une vue en coupe d'une dent d'un stator selon un cinquième mode de réalisation de la présente invention.

Sur les différentes figures, les mêmes références désignent des éléments identiques ou similaires.

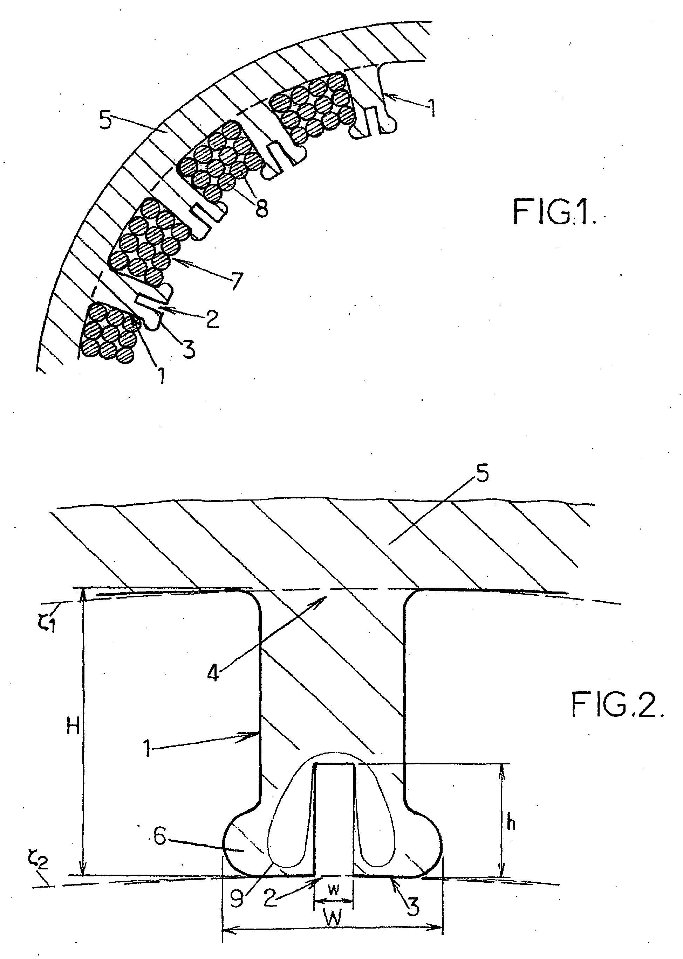

La figure 1 montre une coupe partielle d'un stator d'une machine électrique tournante telle qu'un alternateur comprenant une pluralité de dents ayant chacune une fente 2, et une culasse 5. L'espace entre chaque paire de dents adjacentes forme une encoche 7 à l'intérieur de laquelle sont logés des brins de bobinage d'induit 8, par exemple en cuivre. Le bobinage 8 peut alternativement être un bobinage inducteur, selon le type de la machine.

Comme représenté à la figure 2, la dent 1 comporte une face terminale 3, qui peut être une portion d'un cylindre de révolution d'axe confondu avec l'axe de révolution de la machine tournante. Une base de dent 4 relie la dent 1 à la culasse 5 du stator. La hauteur H de la dent 1 du stator peut être définie par la distance séparant la face terminale 3 de la dent du stator 1 et la base 4 de la dent suivant une direction radiale. Egalement, elle peut être définie par la distance séparant un cylindre C1 extérieur passant par l'ensemble des bases des dents du stator 1 et ayant pour axe l'axe de rotation de la machine, d'une part et un cylindre intérieur C2, coaxial au cylindre extérieur C1, passant par l'ensemble des faces terminale 3 des dents 1, d'autre part.

La dent du stator 1 comporte une fente 2 dont la profondeur h, prise suivant une direction radiale également, est comprise entre 25% et 35% de la hauteur H et de manière encore préférée, la profondeur h est égale à environ un tiers (33%) de la hauteur H.

La fente 2 n'est ainsi pas trop profonde afin de ne pas détourner la boucle de courant de Foucault, représentée schématiquement par le trait plein référencé 9, au niveau de la base 4 de la dent 1. De plus, par des simulations diverses effectuées par la demanderesse, il a été montré que la profondeur optimale pour la réduction des pertes par courants de Foucault est d'environ un tiers parce que la saturation magnétique du matériau aux alentours du pied de dent 6 (sans ou avec bourrelets) est plus importante que dans la base de la dent 4. Par conséquent, l'efficacité de la machine tournante est améliorée, et les pertes fer réduites.

Par ailleurs, dans un mode de réalisation conforme à la figure 2, la dent 1 comporte un pied de dent 6 sensiblement élargi par rapport au reste de la dent 1. Selon le mode de réalisation ainsi représenté, la largeur w de la fente 2 prise dans une direction circonférentielle perpendiculaire à l'axe de la machine est inférieure à la moitié de la largeur W du pied de dent 6, prise dans cette même direction.

Ainsi, la largeur de la fente 2 n'est pas trop importante, de telle sorte qu'un flux magnétique, s'écoulant dans la dent suivant la direction radiale, ne soit pas perturbé par la présence de la fente 2.

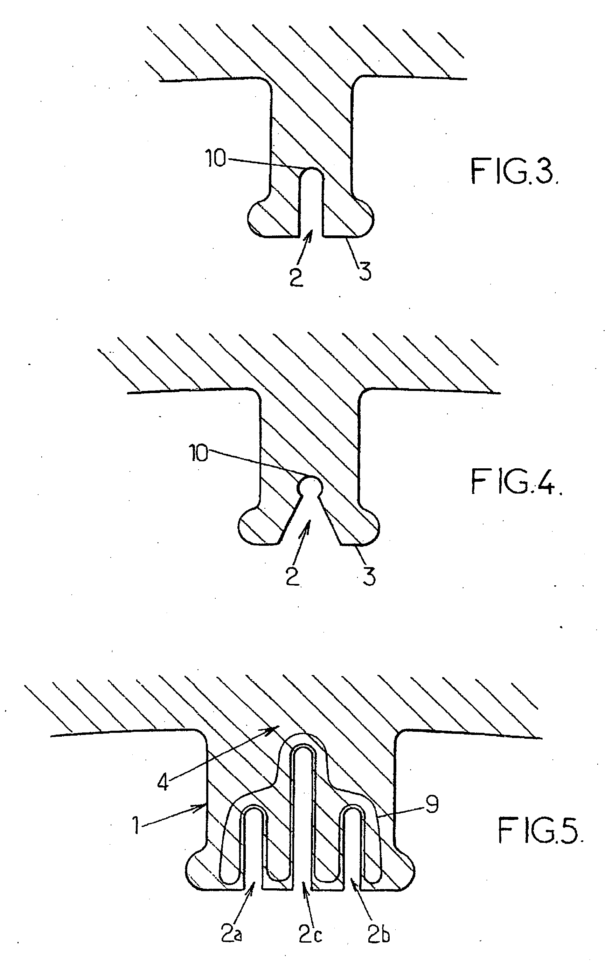

Selon un deuxième mode de réalisation, représenté à la figure 3, la fente 2 comporte un fond de fente 10 dont la forme est sensiblement arrondie.

En arrondissant le fond de la fente 10, une concentration ponctuelle des courants de Foucault est évitée au voisinage du fond de la fente 10. Cela permet ainsi de limiter l'échauffement dû au passage d'un fort courant en un point d'extension spatial limité. Ainsi, en utilisant une forme arrondie, on peut éviter un échauffement et donc une détérioration du matériau composant le stator.

La figure 4 montre un troisième mode de réalisation dans lequel la section de la fente 2 dans un plan perpendiculaire à l'axe de la machine a une forme sensiblement trapézoïdale s'élargissant à mesure que l'on s'approche de la face terminale depuis la base de la dent. De plus, comme dans le deuxième mode de réalisation, le fond de la fente 10 est également de forme arrondie. Dans le cas représenté, l'arrondi du fond de la fente 10 peut former un arc de cercle d'un angle supérieur à 180°.

Une telle forme de fente est facile à réaliser par exemple par un procédé de poinçonnage ou encore un procédé de découpe laser. Par conséquent, le coût de fabrication d'un tel stator est réduit.

Selon un quatrième mode de réalisation illustré par la figure 5, une dent 1 comporte une pluralité de fentes 2a, 2b, 2c, de profondeurs différentes. Une première fente latérale 2a et une seconde fente latérale 2b sont disposées de part et d'autre d'une fente centrale 2c.

En utilisant une pluralité de fentes, les boucles de courants de Foucault sont si allongées que l'intensité du courant est très fortement diminuée. Par ailleurs, cela présente des avantages au niveau du bruit magnétique. En effet, dans une machine électrique tournante, les variations d'induction magnétique génèrent un bruit magnétique dans le matériau magnétique notamment dans le stator. Ainsi, en réalisant des fentes dans les dents du stator, les harmoniques fréquentielles du bruit magnétique sont repoussées vers de plus hautes fréquences, éventuellement au-delà de la sensibilité auditive de l'Homme. De plus, le bruit magnétique est diminué.

Dans le cas représenté, les fentes latérales 2a et 2b sont symétriques l'une de l'autre par rapport à la fente centrale 2c, celle-ci étant disposée sensiblement au milieu de la face terminale 3 de la dent, suivant la direction circonférentielle. D'autres répartitions spatiales de la pluralité de fentes peuvent être adaptées sur la face terminale 3.

En plaçant la fente la plus profonde ou postérieure centrale, on évite d'entraver le flux magnétique traversant la base de la dent. Le fait que la profondeur et la position des fentes soient aléatoires permet de mieux répartir les harmoniques du bruit magnétique, et aussi l'intensité du bruit magnétique.

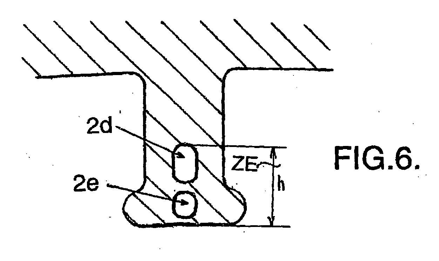

Selon un cinquième mode de réalisation illustré par la figure 6, une dent 1 comporte une zone d'évidement ZE.

De manière générale, conformément à l'invention, cette zone d'évidement ZE peut comprendre un ou plusieurs évidements ayant sensiblement la même fonction que les fentes décrites ci-dessus dans les premier à quatrième modes de réalisation. Comme montré à la Fig.6, la zone d'évidement comprend ici deux évidements 2d et 2e.

Ce cinquième mode de réalisation est davantage préconisé pour une application de l'invention dans des machines polyphasées de type bobinages concentrées. En effet, dans ce type de machine, une zone d'évidement réalisée sous la forme d'une ou plusieurs fentes débouchant au niveau de la face terminale de la dent pourrait conduire à un certain écrasement de la dent par exemple lors de l'opération de bobinage du fil autour de celle-ci, du fait d'un fléchissement dû à une diminution de la résistance mécanique de la dent.

Dans ce cinquième mode de réalisation, les évidements 2d et 2e sont séparés par une portion formant nervure de la carcasse de la dent. De plus, l'évidement 2e ne débouche pas sur la face terminale de la dent, ce qui participe également à la résistance mécanique de celle-ci. Bien entendu, dans d'autres modes de réalisation, l'évidement 2e peut prendre la forme d'une fente débouchant sur la face terminale de la dent.

Selon d'autres modes de réalisation, toutes les dents comportent au moins un zone d'évidement ou une fente, pour améliorer l'effet de réductions des pertes par courants de Foucault et la diminution du bruit magnétique en le généralisant à toute la machine.

Selon un mode de réalisation, ces fentes ou zones d'évidement sont réalisées par poinçonnage ou par découpe laser.

## Revendications

1. Machine électrique tournante, notamment un alternateur de véhicule automobile, possédant un rotor et un stator, le stator comportant une culasse (5) et une pluralité d'encoches (7) pour recevoir des brins de bobinage d'induit (8), et des dents (1) séparant les encoches adjacentes (7), lesdites dents (1) comprenant chacune une base (4) par laquelle la dent (1) est reliée à ladite culasse (5) du stator, et une face terminale (3) tournée vers le rotor, la face terminale (3) d'au moins une dent (1) comprenant au moins une zone d'évidement (2) comportant au moins un évidement en position angulaire intermédiaire entre les bords des dents (1) qui délimitent lesdites encoches (7), ladite zone d'évidement (2) ayant pour fonction de réduire les pertes par courants de Foucault par une augmentation du trajet desdits courants,
**caractérisée en ce que** ledit évidement s'étend suivant la direction radiale sur une profondeur qui est comprise entre 25% et 35% de la distance entre la face terminale (3) et la base (4) de la dent (1) appelée hauteur de la dent.

2. Machine selon la revendication 1, dans laquelle la profondeur de l'évidement est sensiblement égale à un tiers de la hauteur de la dent (1).

3. Machine selon l'une quelconque des revendications précédentes dans laquelle toutes les dents (1) du stator comportent au moins une zone d'évidement (2).

4. Machine selon l'une des revendications précédentes, dans laquelle la largeur de la zone d'évidement (2) au niveau de la face terminale (3) est comprise entre 1% et 50% de la largeur de ladite face terminale (3), ces largeurs étant définies suivant une direction circonférentielle perpendiculaire à l'axe de la machine et à la direction radiale.

5. Machine selon l'une des revendications précédentes dans laquelle ledit évidement est une fente (2) débouchant sur la face terminale (3) de la dent (1) et, au niveau du fond (10) de la fente (2), la section de la fente (2) suivant un plan essentiellement perpendiculaire à l'axe de la machine est de forme arrondie.

6. Machine selon la revendication 5, dans laquelle la fente a une forme sensiblement trapézoïdale qui s'étend en s'élargissant depuis la base de la dent vers la face terminale, et ladite section de la fente, suivant un plan essentiellement perpendiculaire à l'axe de la machine et qui est de forme arrondie, forme un arc d'au moins 180°.

## Claims

1. Electrical rotary machine, notably an alternator of a motor vehicle, having a rotor and a stator, the stator comprising a yoke (5) and a plurality of notches (7) in order to receive armature winding strands (8), and teeth (1) separating the adjacent notches (7), the said teeth (1) each comprising a base (4) by which the tooth (1) is connected to the said yoke (5) of the stator, and a terminal face (3) turned towards the rotor, the terminal face (3) of at least one tooth (1) comprising at least one indentation zone (2) comprising at least one indentation in intermediate angular position between the edges of the teeth (1) which delimit the said notches (7), the function of the said indentation zone (2) being to reduce the losses by eddy currents by an increase in the path of the said currents, **characterized in that** the said indentation extends in the radial direction over a depth which is between 25% and 35% of the distance between the terminal face (3) and the base (4) of the tooth (1) called the height of the tooth.

2. Machine according to Claim 1, in which the depth of the indentation is substantially equal to a third of the height of the tooth (1).

3. Machine according to either one of the preceding claims, in which all the teeth (1) of the stator comprise at least one indentation zone (2).

4. Machine according to one of the preceding claims, in which the width of the indentation zone (2) at the terminal face (3) is between 1% and 50% of the width of the said terminal face (3), these widths being defined in a circumferential direction perpendicular to the axis of the machine and to the radial direction.

5. Machine according to one of the preceding claims, in which the said indentation is a slot (2) opening onto the terminal face (3) of the tooth (1) and, at the bottom (10) of the slot (2), the section of the slot (2) on a plane essentially perpendicular to the axis of the machine is of rounded shape.

6. Machine according to Claim 5, in which the slot has a substantially trapezoidal shape which extends widening from the base of the tooth to the terminal face, and the said section of the slot, on a plane essentially perpendicular to the axis of the machine and which is of rounded shape, forms an arc of at least 180°.

## Patentansprüche

1. Drehende elektrische Maschine, insbesondere ein Drehstromgenerator eines Kraftfahrzeugs, die einen Rotor und einen Stator besitzt, wobei der Stator ein Joch (5) und eine Vielzahl von Kerben (7), um Ankerwicklungslitzen (8) aufzunehmen, und Zähne (1) aufweist, die die benachbarten Kerben (7) trennen, wobei die Zähne (1) je eine Basis (4), über die der Zahn (1) mit dem Joch (5) des Stators verbunden ist, und eine zum Rotor weisende Endseite (3) enthalten, wobei die Endseite (3) mindestens eines Zahns (1) mindestens eine Aussparungszone (2) enthält, die mindestens eine Aussparung in Zwischenwinkelstellung zwischen den Rändern der Zähne (1) aufweist, die die Kerben (7) begrenzen, wobei die Aussparungszone (2) die Funktion hat, die Verluste durch Foucault-Ströme durch eine Erhöhung des Wegs der Ströme zu reduzieren,
**dadurch gekennzeichnet, dass** die Aussparung sich in der radialen Richtung über eine Tiefe erstreckt, die zwischen 25% und 35% des Abstands zwischen der Endseite (3) und der Basis (4) des Zahns (1) liegt, Zahnhöhe genannt.

2. Maschine nach Anspruch 1, bei der die Tiefe der Aussparung im Wesentlichen gleich einem Drittel der Höhe des Zahns (1) ist.

3. Maschine nach einem der vorhergehenden Ansprüche, bei der alle Zähne (1) des Stators mindestens eine Aussparungszone (2) aufweisen.

4. Maschine nach einem der vorhergehenden Ansprüche, bei der die Breite der Aussparungszone (2) im Bereich der Endseite (3) zwischen 1% und 50% der Breite der Endseite (3) liegt, wobei diese Breiten gemäß einer Umfangsrichtung lotrecht zur Achse der Maschine und zur radialen Richtung definiert sind.

5. Maschine nach einem der vorhergehenden Ansprüche, bei der die Aussparung ein Schlitz (2) ist, der an der Endseite (3) des Zahns (1) mündet, und im Bereich des Bodens (10) des Schlitzes (2) der Querschnitt des Schlitzes (2) gemäß einer Ebene im Wesentlichen lotrecht zur Achse der Maschine von abgerundeter Form ist.

6. Maschine nach Anspruch 5, bei der der Schlitz im Wesentlichen eine Trapezform hat, die sich von der Basis des Zahns zur Endseite erstreckt, indem sie sich verbreitert, und der Querschnitt des Schlitzes, gemäß einer Ebene im Wesentlichen lotrecht zur Achse der Maschine und der von abgerundeter Form ist, einen Bogen von mindestens 180° bildet.
